# EUROPÄISCHE PATENTANMELDUNG

(11) **EP 1 376 339 A2**
(43) Veröffentlichungstag der Anmeldung: **02.01.2004**
(21) Anmeldenummer: 03013195.7
(22) Anmeldetag: 12.06.2003
(51) Int. Cl.: G06F 9/44

(54) **Anzeigesystem und Verfahren zur Anzeige von Information von wenigstens einer Überwachungseinrichtung eines Arbeitsgeräts**

(30) Priorität: 20.06.2002 US 176279
(71) Anmelder: DEERE & COMPANY, Moline, Illinois 61265-8098 (US)
(72) Erfinder: Andersen, Wayne A., Bettendorf, IA 52722 (US); Bajc, Michael, Des Moines, IA 50320 (US)
(74) Vertreter: Holst, Sönke, Dr.

(57) **Zusammenfassung**

Die Erfindung bezieht sich auf ein Anzeigesystem (12) und ein Verfahren zur Anzeige von Information von wenigstens einer Uberwachungseinrichtung (28, 30) eines Arbeitsgeräts, mit einer Anzeigeeinrichtung (14), einem Sprachenserver (16) und wenigstens einer Überwachungseinrichtung (28, 30) eines Arbeitsgeräts.

Es wird vorgeschlagen, dass eine Mehrzahl von dem Sprachenserver (16) zugänglichen Sprachblocks und eine Bedienereingabeeinrichtung (15) vorhanden sind, die mit dem Sprachenserver (16) in Betriebsverbindung steht, um eine Bedienerauswahl für wenigstens einen der Sprachblocks aus der Mehrzahl der Sprachblocks zu empfangen, wobei der Sprachenserver (16) betreibbar ist, wenigstens einen der Sprachblocks auf die wenigstens eine Überwachungseinrichtung (28, 30) des Arbeitsgeräts zu übertragen.

## Beschreibung

Die Erfindung betrifft ein Anzeigesystem zur Anzeige von Information von wenigstens einer Überwachungseinrichtung eines Arbeitsgeräts, mit einer Anzeigeeinrichtung, einem Sprachenserver und wenigstens einer Überwachungseinrichtung eines Arbeitsgeräts und ein entsprechendes Verfahren.

Ein Beispiel eines Überwachungs- und Anzeigesystems für ein Arbeitsgerät ist das von John Deere erhältliche Green Star Display (GSD). Dieses Display ist ein elektronisches Modul mit einer Anzeige für allgemeine Zwecke und einer Tastatur für allgemeine Zwecke, das verwendet werden kann, Information über den Traktor und/oder das Arbeitsgerät anzuzeigen. Seine grundsätzliche Aufgabe besteht darin, eine Anzeigevorrichtung für unterschiedliche Überwachungseinrichtungen von Arbeitsgeräten bereitzustellen. Derartige Monitore für Arbeitsgeräte können an Mähdreschern, Traktoren, selbstfahrenden Sprühfahrzeugen und anderen Arbeitsgeräten oder Ausrüstungen verwendet werden. Die Arbeitsgerätemonitore können zur Information über die Leistung des Arbeitsgeräts, über GPS, Ertragsüberwachung und andere Zwecke benutzt werden.

Eine einzelne Anzeigeeinheit kann mit verschiedenen Überwachungseinrichtungen von Arbeitsgeräten genutzt werden. Trotz der Vorteile eines derartigen Systems verbleiben Probleme. Es ist insbesondere schwierig, ein derartiges System an verschiedene Sprachen anzupassen. Bei einem derartigen System gibt es viele Probleme bei der Entwicklung einer Schnittstelle, die geeignet ist, mit verschiedenen Sprachen verwendet zu werden. Es wäre wünschenswert, ein einziges Anzeigesystem für Überwachungseinrichtungen von Arbeitsgeräten zu schaffen, das leicht zur Unterstützung vieler Sprachen angepasst werden kann. Es ist außerdem wünschenswert, Anzeigesysteme für Arbeitsgeräte zu schaffen, die an verschiedene fremde Sprachen angepasst werden kann. Es gibt beim Erstellen eines derartigen Systems vielfältige Probleme.

Eine im Stand der Technik bekannte Lösung ist ein System zu verwenden, das eine eingebaute Unterstützung für eine begrenzte Anzahl von Sprachen bereitstellt. Ein derartiges System könnte beispielsweise gebräuchliche Sprachen wie Englisch, Spanisch, Deutsch und Französisch unterstützen. Ein derartiges, dem Stand der Technik entsprechendes System ist in dem von John Deere erhältlichen Greenstar-Produkt verwirklicht. Eine derartige Ausführungsform ist auf eine feste Liste fremder Sprachen begrenzt. Die damit verbundenen Probleme schließen eine fehlende Unterstützung für diese Sprachen ein. Die Unterstützung kann ein Problem sein, weil neue Produktversionen nicht freigegeben werden können, bis alle vier Übersetzungen fertiggestellt sind. Entwicklungsingenieure und Softwareentwickler sind typischer Weise keine Übersetzungsexperten. Daher müsste die Entwicklungsabteilung mit außenstehenden Übersetzern kommunizieren, um Unterstützung bereitzustellen.

Ein weiteres Problem ist, dass der Vorgang der Anpassung eines Softwaresystems an verschiedene Sprachen mehr beinhaltet als einen einfachen Austausch von Textketten. Es könnte notwendig sein, wegen Platzanforderungen das ganze Bildschirmformat oder die Bedienerschnittstelle zu ändern. Textketten in einer Sprache können kürzer oder länger sein als ein Äquivalent in einer anderen Sprache. Daher verbleiben Probleme.

Die der Erfindung zu Grunde liegende Aufgabe wird darin gesehen, ein Anzeigesystem für eine Überwachungseinrichtung für Arbeitsgeräte bereitzustellen, bei dem Übersetzungen von einer Sprache in andere Sprachen erleichtert sind, und das beliebig viele Sprachen unterstützen kann.

Diese Aufgabe wird erfindungsgemäß durch die Lehre der Patentansprüche 1 und 5 gelöst, wobei in den weiteren Patentansprüchen Merkmale aufgeführt sind, die die Lösung in vorteilhafter Weise weiterentwickeln.

Die vorliegende Erfindung bezieht sich auf ein System und ein Verfahren zur Bereitstellung von durch einen Bediener abrufbare Sprachblocks für eine Anzeigeeinrichtung einer Überwachungseinrichtung eines Arbeitsgeräts. Die Überwachungseinrichtung ist mit einer Anzeigeeinrichtung und mit einem Sprachenserver verbunden. Die Anzeigeeinrichtung ermöglicht eine Anzeige von Informationen von der wenigstens einen Überwachungseinrichtung des Arbeitsgeräts. Der Sprachenserver ist auf eine beliebige Art direkt oder indirekt mit einer Bedienereingabeeinrichtung verbunden, während in der Regel ein Bus die Anzeigeeinrichtung und wenigstens eine Überwachungseinrichtung des Arbeitsgeräts verbindet. Das erfindungsgemäße System ermöglicht die Schaffung durch den Bediener auswählbarer Sprachblocks. Dazu wird eine erste Software verwendet, die programmiert ist, einen ersten Sprachblock zu erzeugen, eine zweite Software, die programmiert ist, die Übersetzung des ersten Sprachblocks in einen zweiten Sprachblock zu erleichtern, und der Sprachenserver ist betreibbar, wenigstens einen der Sprachblocks auf die wenigstens eine Überwachungseinrichtung des Arbeitsgeräts zu übertragen. Von dort kann er später abgerufen und auf der Anzeigeeinrichtung angezeigt werden.

Die vorliegende Erfindung stellt ein Überwachungssystem eines Arbeitsgeräts bereit, das geeignet ist, an eine beliebige Zahl von Fremdsprachen angepasst zu werden. Auf diese Weise stellt die vorliegende Erfindung den Vorteil bereit, einem Überwachungssystem eines Arbeitsgeräts zu ermöglichen, verschiedene Fremdsprachen zu unterstützen. Die Software kann leicht aktualisiert werden, um neue Fremdsprachen oder andere Aktualisierungen zu inkorporieren.

Die Übersetzung zwischen den Sprachen kann durch die Software erleichtert werden. Die Software erlaubt nicht nur die Übersetzungen, sondern ermöglicht auch eine Änderung der Bedienerschnittstelle oder des Anzeigeformats, um in verschiedenen Sprachen anzeigen zu können. Das beinhaltet eine Änderung der Objekttypen der anzuzeigenden Objekte, Änderungen von Auswahltypen, Änderungen von Titeltypen, zusätzlich zu einer einfachen Übersetzung von Worten, um sicherzustellen, dass das Anzeigeformat oder die Bedienerschnittstelle für die Verwendung mit verschiedenen Sprachen geeignet ist.

Entsprechend eines erfindungsgemäßen Verfahrens wird ein erster Sprachblock erzeugt, der Text in einer ersten Sprache enthält, der angezeigt werden kann, um sichtbare Rückmeldungen von einer Überwachungseinrichtung eines Arbeitsgeräts bereitzustellen. Nachdem der erste Sprachblock erzeugt wurde, wird der erste Sprachblock in einen zweiten Sprachblock übersetzt, der Text in einer zweiten Sprache enthält, der ebenfalls angezeigt werden kann, um sichtbare Rückmeldungen von einer Überwachungseinrichtung eines Arbeitsgeräts bereitzustellen. Dann wird der zweite Sprachblock in einen Sprachenserver geladen. Dann wird der zweite Sprachblock vom Sprachserver auf eine Überwachungseinrichtung des Arbeitsgeräts übertragen. Dann wird eine sichtbare Rückmeldung von der Überwachungseinrichtung des Arbeitsgeräts entsprechend dem zweiten Sprachblock angezeigt.

Die Erfindung ermöglicht es auch, die zu übersetzende Information auf eine beliebige verfügbare Weise an entfernte, internationale Orte zu übermitteln, an denen die übersetzte Sprache leicht gelesen und verstanden werden kann. Dadurch wird die Verantwortung für die Übersetzung der Information auf Personal übertragen, das in Gegenden der Welt ansässig ist, in denen die Übersetzung verwendet werden wird.

In der Zeichnung ist ein nachfolgend näher beschriebenes Ausführungsbeispiel der Erfindung dargestellt. Es zeigt:
- Fig. 1: ein Blockdiagramm, in dem ein erfindungsgemäßes Anzeigesystem zur Überwachung von Arbeitsgeräten dargestellt ist,
- Fig. 2: eine Vorderansicht einer Anzeige für die Überwachung von Arbeitsgeräten,
- Fig. 3: ein Flussdiagramm, in dem eine erfindungsgemäße Vorgehensweise dargestellt ist, und
- Fig. 4A-4G: bildliche Darstellungen von Bedienerschnittstellen gemäß der vorliegenden Erfindung, die darstellen, wie das Bildformat oder die Bedienerschnittstelle verändert werden kann, um verschiedene Sprachen aufzunehmen.

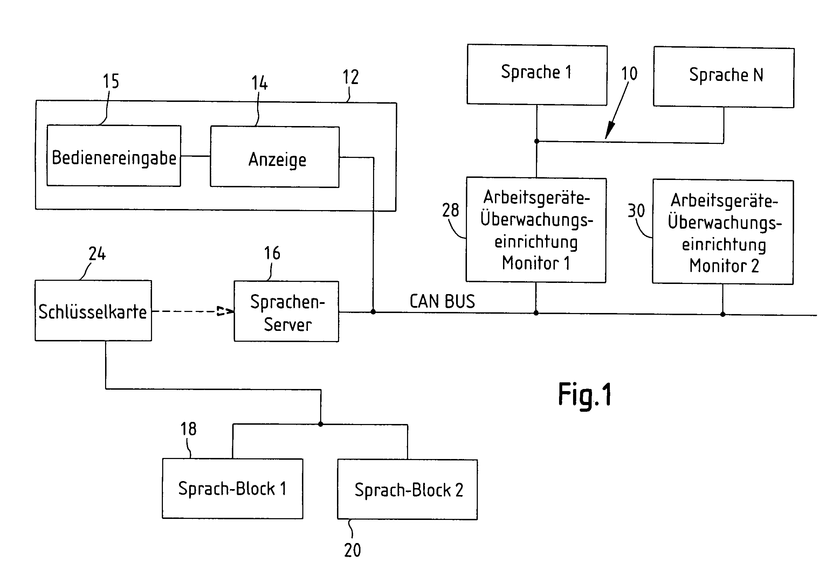

Die vorliegende Erfindung stellt ein System und ein Verfahren zur Überwachung von Arbeitsgeräten bereit, das eine Unterstützung verschiedener Sprachen ermöglicht. Wie in der Figur 1 dargestellt, umfasst das Überwachungssystem 10 für das Arbeitsgerät ein Anzeigesystem 12 zur Überwachung des Arbeitsgeräts. Das Anzeigesystem 12 ist eine Einheit, die eine Anzeigeeinrichtung 14 umfasst, die elektrisch mit einem Sprachenserver 16 verbunden ist. Zusätzlich ist eine Bedienereingabeeinrichtung 15 elektrisch mit dem Sprachenserver 16 verbunden. In den Sprachenserver 16 geladen oder ihm auf andere Weise zugänglich sind eine Vielzahl an Sprachblocks, wie ein erster Sprachblock 18 und ein zweiter Sprachblock 20. Ein entnehmbares Modul 24 wie eine Schlüssel- oder Chipkarte (Key Card^{TM}) ist optional elektrisch mit dem Sprachenserver 16 verbunden. Zusätzliche Sprachblocks sind auf dem entnehmbaren Modul 24 enthalten, damit sie auf den Sprachenserver 16 geladen werden können. Der Sprachenserver 16 ist außerdem elektrisch mit einem Bus 26 verbunden. Der Bus 26 kann ein Controller Network Area (CAN) - Bus oder ein anderer Bus oder eine andere im Stand der Technik bekannte Verbindung sein. An den Bus 26 ist zumindest eine Überwachungseinrichtung 28, 30 des Arbeitsgeräts angeschlossen. Die Überwachungseinrichtungen 28, 30 können die Leistung des Arbeitsgeräts messen oder die Motorleistung oder Fahrzeugleistung überwachen. Zusätzlich können die Überwachungseinrichtungen mit spezifischeren Überwachungsaufgaben betraut sein. Wenn sie beispielsweise mit in Verbindung mit landwirtschaftlichen Arbeitsgeräten verwendet werden, können die Überwachungseinrichtungen 28 verwendet werden, Erträge zu erfassen oder den Erntevorgang, den Sävorgang, das Ausbringen von Chemikalien oder andere Vorgänge auf andere Weise zu überwachen. Wie dargestellt, sind eine erste Arbeitsgeräte-Überwachungseinrichtung 28 und eine zweite Arbeitsgeräteüberwachungseinrichtung 30 elektrisch mit dem Bus 26 verbunden.

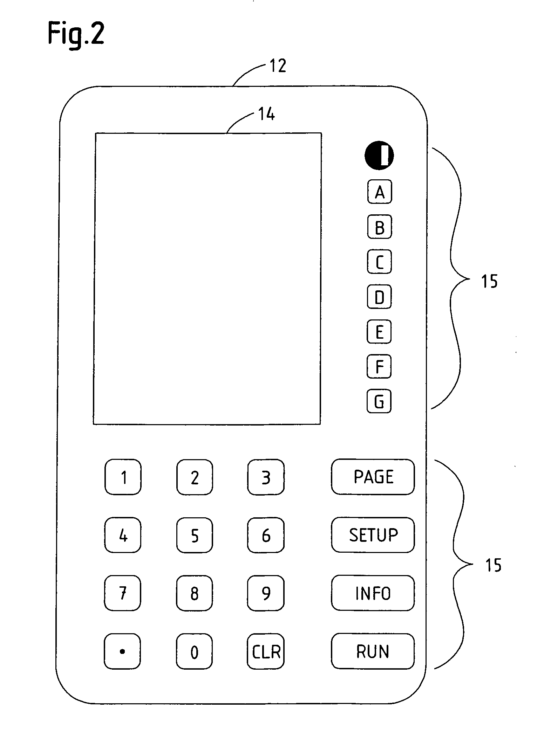

Die Figur 2 zeigt eine Vorderansicht eines erfindungsgemäßen Anzeigesystems 12 zur Überwachung des Arbeitsgeräts. In der Figur 2 umfasst das Anzeigesystem 12 eine Anzeigeeinrichtung 14 und eine Vielzahl an Bedienereingabeeinrichtungen 15. Obwohl in Figur 2 nicht gezeigt, schließt das Anzeigesystem 12 auch einen elektrisch mit der Anzeigeeinrichtung 14 und den Bedienereingabeeinrichtungen 15 verbundenen Sprachenserver ein. Zusätzlich ist das Anzeigesystem 12 vorzugsweise eingerichtet, ein entnehmbares Gerät (Modul) wie zum Beispiel eine Chipkarte aufzunehmen, die weitere Sprachblocks enthält.

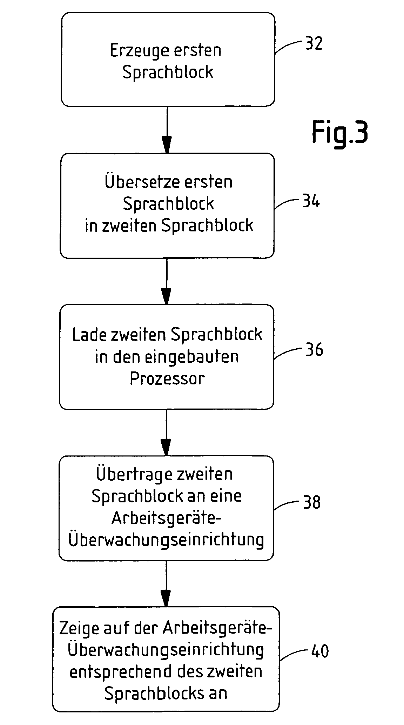

Die Figur 3 zeigt ein Flussdiagramm eines erfindungsgemäßen Verfahrens. Im Schritt 32 der Figur 3 wird ein erster Sprachblock erzeugt. Der erste Sprachblock könnte in englischer Sprache sein, obwohl die vorliegende Erfindung ermöglicht, dass der erste Sprachblock in einer beliebigen Sprache ist. Der erste Sprachblock ist vorzugsweise in einer Sprache, die die Entwicklungsingenieure und/oder Softwareentwickler flüssig beherrschen. Im Schritt 34 wird der erste Sprachblock übersetzt, um einen zweiten Sprachblock zu erzeugen. Zusätzlich zu einer bloßen Übersetzung von Worten schlägt die vorliegende Erfindung vor, das Anzeigeformat (d. h. die mit dem ersten Sprachblock verbundene Bedienerschnittstelle) zu ändern, um ein zweites Anzeigeformat zu schaffen. Beispielsweise könnte im Übersetzungsprozess ein einzelnes englisches Wort nicht in ein einzelnes deutsches Wort übersetzbar sein. Außerdem könnte das englische Wort länger oder kürzer als das deutsche Wort sein. Die vorliegende Erfindung vermeidet Begrenzungen, die bisher die Möglichkeit einschränkten, korrekte Übersetzungen bereitzustellen. Die vorliegende Erfindung ermöglicht es beispielsweise, Objekttypen zu wechseln. Zusätzlich ermöglicht es die vorliegende Erfindung, Auswahltypen zu ändern, so wie Titeltypen. Diese unterschiedlichen Typen sind lediglich Mittel zur Beschreibung des Anzeigeformats und der Elemente oder Objekte, die Teil des Anzeigeformats sind.

Als nächstes wird im Schritt 36 der zweite Sprachblock in den Sprachenserver 16 innerhalb des Anzeigesystems 12 geladen. Der Sprachblock kann auf irgendeine Weise geladen werden. Er kann beispielsweise von einer Chipkarte oder einem anderen entfernbaren Modul 24 wie auch aus einem beliebigen anderen Speicher in den Sprachenserver 16 geladen werden.

Als nächstes wird im Schritt 38 der zweite Sprachblock in die wenigstens eine Arbeitsgeräte-Überwachungseinrichtung 28, 30 übertragen. Falls der Sprachenserver 16 elektrisch über den Bus 26 mit einem oder mehreren Überwachungseinrichtungen 28, 30 verbunden ist, wird der Sprachblock über den Bus 26 vom Sprachenserver 16 auf die Überwachungseinrichtung 28, 30 übertragen.

Als nächstes wird im Schritt 40 die Information von der Arbeitsgeräte-Überwachungseinrichtung 28, 30 auf der Anzeigeeinrichtung 14 entsprechend des zweiten Sprachblocks zu Anzeige gebracht. Das schließt ein Anzeigen des Texts in der richtigen Sprache und eine Auswahl geeigneter Objekttypen, Titeltypen, Auswahltypen und/oder anderer mit dem Anzeigeformat verbundener Eigenschaften ein.

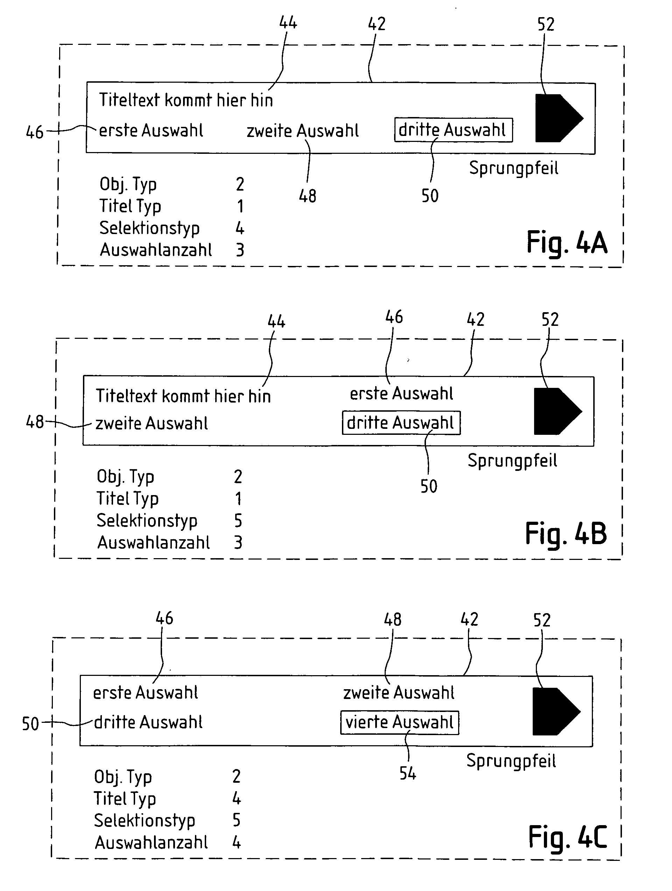

Die Anpassung des Anzeigeformats oder der Bedienerschnittstelle unterstützt den Übersetzungsprozess. Die Figuren 4A bis 4G illustrieren repräsentative Arten, gemäß denen die Anzeige oder Bedienerschnittstelle beim Schaffen neuer Sprachblocks geändert werden kann. Es ist anzumerken, dass diese Änderungen durchführbar sind, ohne eine Neuprogrammierung zu erfordern. Außerdem können beliebig viele mit dem Anzeigeformat oder der Bedienerschnittstelle verbundene Eigenschaften geändert werden.

Falls der erste Sprachblock auf Englisch erzeugt wird, wird ein Generator für eine englischsprachige Datei verwendet, eine Datei zu erzeugen, die den gesamten englischen Text enthält, der von der Anwendung verwendet wird. Der Generator für die englischsprachige Datei zeichnet in der Datei Informationen auf, die von Übersetzern benötigt werden. Nachdem diese Funktion ausgeführt wurde, wird ein Übersetzerwerkzeug für den englischen Sprachblock verwendet, um die Übersetzung des englischen Texts in andere Sprachen zu erleichtern. Der Übersetzer kann nun Sprachobjekte festlegen, um Gruppen verwandten Texts zu übersetzen. Das erlaubt dem Übersetzer, die Worte anders anzuordnen, um den fremdsprachigen Text aufnehmen zu können, der eine andere Länge als der englische Text hat oder von einer anderen Syntax ist. Das hat eine Verschiebung der Übersetzungsverantwortung von Ingenieuren auf den Übersetzer zur Folge.

In der Figur 4A ist eine Anzeige oder ein Format 42 dargestellt. Es wird ein Titeltext 44 dargestellt, sowie drei unterschiedliche Auswahlmöglichkeiten, eine erste Auswahlmöglichkeit 46, eine zweite Auswahlmöglichkeit 48 und eine dritte Auswahlmöglichkeit 50. Die dritte Auswahlmöglichkeit 50 ist ausgewählt. Zusätzlich wird ein Sprungpfeil 52 (toggle arrow) gezeigt, der einem Bediener ermöglicht, zwischen verschiedenen Auswahlmöglichkeiten zu springen. Die vorliegende Erfindung ermöglicht verschiedene Variationen der verwendeten Objekte, der verwendeten Titel und der verwendeten Auswahlmöglichkeiten. Der zu verwendende Objekttyp, der zu verwendende Titeltyp und der zu verwendende Auswahltyp hängen zumindest teilweise von der Menge oder Größe des übersetzten Texts ab.

Ein anderes Beispiel eines Anzeigeformats oder einer Bedienerschnittstelle ist in der Figur 4B gezeigt. Die Anzeige 42 umfasst den Titeltext 44 wie auch drei Auswahlmöglichkeiten, die erste Auswahlmöglichkeit 46, eine zweite Auswahlmöglichkeit 48 und eine dritte Auswahlmöglichkeit 50. Die Figuren 4A und 4B unterscheiden sich hinsichtlich des ausgewählten Auswahltyps. Der in Figur 4B ausgewählte Auswahltyp ermöglicht es, die erste Auswahl 46 in derselben Zeile anzuordnen wie den Titeltext 44. Dieser Auswahltyp eignet sich für die Situation, die sich ergibt, wenn die erste Auswahlmöglichkeit 46, die zweite Auswahlmöglichkeit 48 und die dritte Auswahlmöglichkeit 50 zu lang sind, um in eine einzige Zeile zu passen - wie die in Figur 4A dargestellte.

Die Figur 4C enthält noch eine andere Darstellung, wie das Anzeigeformat geändert werden kann, um die Übersetzung von Sprachblocks in unterschiedliche Sprachen zu unterstützen. Gemäß Figur 4C gibt es vier Auswahlmöglichkeiten, die eine erste Auswahlmöglichkeit 46, eine zweite Auswahlmöglichkeit 48, eine dritte Auswahlmöglichkeit 48 und eine vierte Auswahlmöglichkeit 54 beinhalten. In Figur 4C ist der Titel nicht dargestellt, um Raum für alle auswählbaren Auswahlmöglichkeiten zu schaffen.

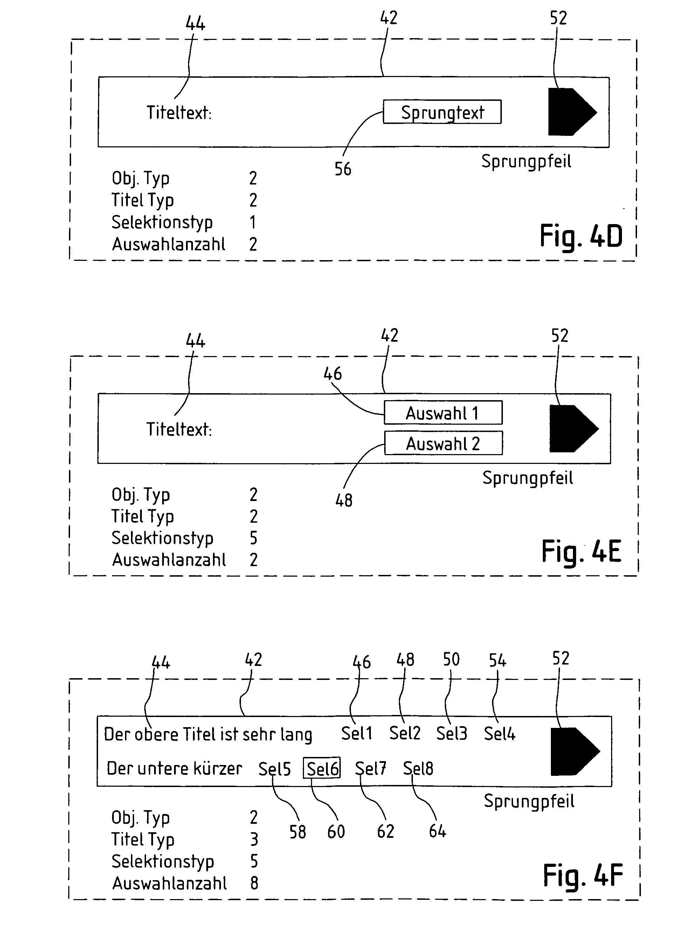

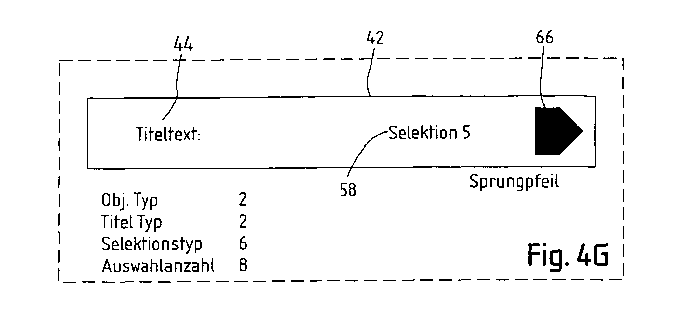

Ein anderes Beispiel ist in der Figur 4D gezeigt. In Figur 4D wird ein zentrierter Titel 44 gezeigt und sind zwei Auswahlmöglichkeiten verfügbar, obwohl nur eine Auswahlmöglichkeit auf einmal gezeigt wird. Bei der Auswahlmöglichkeit 56 kann zwischen zwei oder mehr Werten gesprungen werden. Ein anderes Beispiel eines Anzeigeformats ist in der Figur 4E gezeigt. In der Figur 4E ist der Titel 44 zentriert und es gibt zwei verfügbare Auswahlmöglichkeiten, die in unterschiedlichen Zeilen sind.

Wie in der Figur 4F gezeigt, gibt es acht verfügbare Auswahlmöglichkeiten und der Titel 44 hat zwei Zeilen, wobei die obere Titelzeile länger als die untere Titelzeile ist.

In der Figur 4G ist der Titel 44 zentriert und es gibt acht Auswahlmöglichkeiten. Verschiedene Auswahlmöglichkeiten können durch Verwendung eines "gehe zu"-Pfeils 66 ausgewählt werden, um zwischen den Auswahlmöglichkeiten auszuwählen.

Die vorliegende Erfindung ermöglicht es, das Anzeigeformat auf diese oder andere Weisen zu verändern, um richtige fremdsprachige Übersetzungen aufzunehmen. Der Objekttyp, Titeltyp, Auswahltyp und andere sichtbare Eigenschaften des Anzeigeformats werden entsprechend dem nach der Übersetzung des Texts verfügbaren Platz und anderer Erwägungen, die sich aus einer richtigen Übersetzung ergeben, ausgewählt. Die Auswahl des richtigen Anzeigeformats wird entweder selbsttätig durch die Software festgelegt oder durch einen Bediener ausgewählt.

Die vorliegende Erfindung stellt daher ein System und ein Verfahren bereit, dem Anzeigesystem 12 zur Überwachung des Arbeitsgeräts durch den Bediener auswählbare, ladbare Sprachblocks bereitzustellen. Die Erfindung ermöglicht eine Änderung von Sprachblöcken, um verschiedene Fremdsprachen anzeigen zu können. Dabei müssen keine Ingenieure am Übersetzungsprozess beteiligt sein.

Es ist hervorzuheben, dass die vorliegende Erfindung es ermöglicht, eine beliebige Anzahl an Sprachen zu nutzen und jede Sprache, verschiedene Anzeigeformate oder Schnittstellen, verschiedene Typen optionaler, entfernbarer Module, die Sprachblocks enthalten, beliebige Typen von Überwachungseinrichtungen und andere Abwandlungen zu verwenden.

Wie zuvor angedeutet, ermöglicht das Verfahren, bei dem die optische Rückmeldung an entfernte, internationale Orte übermittelt wird, an denen die übersetzte Sprache leicht gelesen und verstanden werden kann, die Verantwortung für die Handhabung der übersetzten Information von lokalen Bereichen zu verschieben, um einen geeigneten und verantwortungsbewussten Betrieb in verschiedenen Regionen der Welt zu unterstützen.

## Patentansprüche

1. Anzeigesystem (12) zur Anzeige von Information von wenigstens einer Überwachungseinrichtung (28, 30) eines Arbeitsgeräts, mit einer Anzeigeeinrichtung (14), einem Sprachenserver (16) und wenigstens einer Überwachungseinrichtung (28, 30) eines Arbeitsgeräts, mit:
einer Mehrzahl von dem Sprachenserver (16) zugänglichen Sprachblocks,
einer Bedienereingabeeinrichtung (15), die mit dem Sprachenserver (16) in Betriebsverbindung steht, und
eingerichtet ist, eine Bedienerauswahl für wenigstens einen der Sprachblocks aus der Mehrzahl der Sprachblocks zu empfangen, wobei
der Sprachenserver (16) betreibbar ist, wenigstens einen der Sprachblocks auf die wenigstens eine Überwachungseinrichtung (28, 30) des Arbeitsgeräts zu übertragen.

2. Anzeigesystem (12) nach Anspruch 1, wobei die Sprachblocks eine Anzeigeformatinformation enthalten.

3. Anzeigesystem (12) nach Anspruch 2, wobei die Anzeigeformatinformation einen Objekttyp beinhaltet, um eine Änderung des Texts und des Formats, in dem er dargestellt wird, zu ermöglichen.

4. Anzeigesystem (12) nach einem der vorhergehenden Ansprüche, wobei ein entnehmbares Modul (24) vorhanden ist, das betriebsmäßig mit dem Sprachenserver (16) verbunden ist und zumindest einen Sprachblock enthält.

5. Verfahren zur Bereitstellung eines Anzeigesystems (12) zur Überwachung eines Arbeitsgeräts, mit folgenden Schritten:
Erzeugen eines ersten Sprachblocks, der Text in einer ersten Sprache enthält, der zwecks sichtbarer Rückmeldung von einer Überwachungseinrichtung (28, 30) eines Arbeitsgeräts sichtbar anzeigbar ist,
Übersetzen des ersten Sprachblocks in einen zweiten Sprachblock, der den Text in einer zweiten Sprache enthält, der zwecks sichtbarer Rückmeldung von einer Überwachungseinrichtung (28, 30) eines Arbeitsgeräts sichtbar anzeigbar ist,
Übertragen des zweiten Sprachblocks in einen Sprachenserver (16),
Übertragen des zweiten Sprachblocks vom Sprachenserver (16) auf eine Überwachungseinrichtung (28, 30) des Arbeitsgeräts, und
Anzeigen sichtbarer Rückmeldungen von der Überwachungseinrichtung (28, 30) des Arbeitsgeräts entsprechend des zweiten Sprachblocks.

6. Verfahren nach Anspruch 5, einschließlich des Schrittes einer Änderung eines ersten Anzeigeformats, das mit dem ersten Sprachblock verbunden ist, um ein zweites Anzeigeformat zu erstellen, das mit dem zweiten Sprachblock verbunden ist.

7. Verfahren nach Anspruch 6, wobei der Schritt der Änderung des Anzeigeformats eine Änderung eines Objekttyps beinhaltet, um eine Änderung des Texts und des Formats, in dem er präsentiert wird, zu ermöglichen.

8. Verfahren nach einem der Ansprüche 5 bis 7, wobei beim Schritt des Übersetzens des ersten Sprachblocks in einen zweiten Sprachblock eine Software verwendet wird, die eine Übersetzung des ersten Sprachblocks erleichtert.

9. Verfahren nach Anspruch 9, wobei die Software es einem Bediener ermöglicht, ein für die Anzeige des Sprachblocks verwendetes Anzeigeformat zu ändern.

10. Verfahren nach einem der Ansprüche 5 bis 9, wobei der erste Sprachblock an entfernte, internationale Orte übermittelt wird, an denen die übersetzte Sprache leicht gelesen und verstanden werden kann, und dort übersetzt wird.
